# DEMANDE DE BREVET EUROPEEN

(11) **EP 2 239 924 A1**
(43) Date de publication de la demande: **13.10.2010**
(21) Numéro de dépôt: 09305301.5
(22) Date de dépôt: 08.04.2009
(51) Int. Cl.: H04L 29/08

(54) **Procédé de présélection d'au moins une application dans un dispositif mobile de communication comportant un système NFC**

(71) Demandeur: Gemalto SA, 92190 Meudon (FR)
(72) Inventeur: Fine, Jean-Yves, 92197, MEUDON CEDEX (FR); Rhelimi, Alain, 92197, MEUDON CEDEX (FR)

(57) **Abrégé**

L'invention concerne un procédé de présélection Procédé de présélection d'au moins une application hébergée au sein d'un élément sécurisé ou non embarqué dans un dispositif mobile de communication comportant un système NFC, ledit dispositif étant apte à accéder et à lire un ensemble d'informations stockées dans un système NFC cible, de type carte ou étiquette électronique sans contact, ledit système NFC étant apte à fonctionner selon au moins deux modes de communication parmi un mode lecteur, et un mode émulation de carte, ou un mode Peer-to-Peer. Lorsque le système NFC est dans le mode lecteur, on présélectionne une application lors d'une étape de lecture d'information stockées dans ledit système NFC cible.

## Description

La présente invention concerne le domaine des télécommunications sans fil à très courte distance, dites de type NFC « Near Field Communication » ou « communication en champ proche ».

La présente invention concerne plus particulièrement le domaine des applications hébergées au sein d'un élément sécurisé ou non embarqué dans un dispositif mobile fonctionnant suivant les standards NFC, notamment le domaine des transactions sans contact opérées au sein de terminaux NFC capable de lire des cartes ou des étiquettes électroniques.

La technologie de transmission sans contact en champ proche ou NFC permet la communication entre un coupleur (appartenant à une infrastructure) et un dispositif mobile de communication sans fil, ou entre au moins deux dispositifs mobiles de communication sans fil. Cette technologie est basée sur une transmission de données via la modulation d'un champ magnétique produit par la bobine d'un lecteur (PCD : Proximity Coupling Device) et une transmission de données en retour produit par la modulation du courant induit par couplage dans la bobine d'une carte (PICC : Proximity Card). Des techniques de modulation et de protocoles sont par exemple décrits dans des standards tels le standard ISO 14443 ou encore le standard ISO 18092.

Les dispositifs intégrant la technologie NFC fonctionnent selon des protocoles de communications standards tels que par exemple ISO 14443, ISO 18092, JIS X6319-4, ou propriétaires.

Trois modes de fonctionnement sont usuellement disponibles :
- un mode « lecteur » permet la lecture et l'écriture de cartes sans contact et/ou d'étiquettes électroniques sans contact, appelées également « tag » ou « smart poster » en anglais. Ce mode permet par exemple à un usager de lire des informations en approchant un dispositif mobile de communication sans fil devant des étiquettes électroniques disposées par exemple dans la rue, sur des affiches, des colis ou dans des abris bus, ou autre. Dans ce mode, le dispositif mobile de communication sans fil devient un lecteur de cartes sans-contacts ou de « tags » passifs.
- un mode « Emulation de carte » permet d'émuler une carte sans contact, c'est à dire que le dispositif mobile de communication sans fil associé à un élément de sécurité par exemple de type carte à puce, émule le fonctionnement de la carte à puce sans-contact.
- un mode « P2P » (Peer To Peer) permet de s'affranchir de rôle maître du lecteur ou esclave de la carte en fournissant un comportement équilibré (ni maître, ni esclave) entre deux dispositifs NFC.

Un dispositif mobile de communication sans fil peut héberger de multiples applications qui peuvent être en conflits, c'est-à-dire qui ne peuvent pas s'interfacer avec le coupleur de l'infrastructure car elles exposent des paramètres de communications incompatibles.
Le dispositif mobile de communication sans fil NFC est un dispositif multi-mode et multi-protocole.

Une application est définie par une configuration de protocole et de mode. En général, le dispositif mobile de communication sans fil peut inclure différentes applications, telles que des applications de type « Lecteur », applications de type « Emulation de carte », ou autre. Pour des applications de type « Lecteur », le dispositif mobile de communication sans fil est en mode lecteur pour lire ou écrire un dispositif distant par le biais de la technologie sans contact. Le dispositif mobile de communication sans fil est dans ce cas utilisé comme un lecteur RFID. Pour des applications de type « Emulation de carte », le dispositif mobile de communication sans fil NFC est en mode émulation de carte pour être lu par des coupleurs conventionnels dans des applications de paiement ou de contrôle d'accès payant (machine de paiement, entrée de métro, etc.). Le dispositif mobile de communication sans fil, par exemple un téléphone mobile, est alors utilisé comme une carte à puce. Le programme de l'application est par exemple détenu et exécuté par un processeur sécurisé, l'accès au service nécessitant une identification de l'abonné. Un lecteur de carte permissif pourrait selon les standards cités précédemment, accepter toute carte quels que soient ses paramètres.

Toutefois avec les standards NFC actuels, ces paramètres ne sont pas uniquement nécessaires à l'établissement de la connexion pour assurer le transport de commandes et de données de l'application. Certains paramètres contiennent des données applicatives qui ne permettent plus un paramétrage générique indépendant des applications. Les paramètres qui ne contiennent pas de données applicatives sont parfois testés par le lecteur. Ce dernier peut alors tout simplement rejeter la carte lorsque les paramètres exposés par la carte ne sont pas strictement et uniquement les paramètres qu'il attend. Ceci peut parfois conduire à des conflits entre applications qui ne peuvent pas partager les mêmes paramètres NFC de connexion.

Une solution concernant la cohabitation de plusieurs applications utilisant le mode d'émulation de carte, consiste par exemple à utiliser un algorithme selon lequel chaque application est délivrée au terminal avec son ensemble de paramètres NFC et deux masques A et B. Le masque A appliqué sur les paramètres, informe sur les données obligatoires et attendues par le lecteur. Le masque B appliqué sur les paramètres, informe sur les données qui ne sont pas testées par le lecteur. Selon cet algorithme, deux applications ne sont pas en conflit si la fusion de leurs paramètres (ET logique) ne présente pas de différences (OU exclusif) sur les paramètres attendus par les lecteurs et/ou s'il y a des différences, celles-ci portent sur des données non attendus par les lecteurs.

Avec cette solution, l'utilisateur du dispositif mobile dispose d'un moyen de détecter des applications en conflits et de présélectionner les applications qui peuvent cohabiter afin d'opérer la transaction rapidement sans que celui-ci n'ait à intervenir, notamment dans une phase où le temps est critique, par exemple pour des applications liées au transport d'usagers.

Toutefois, cette solution n'est pas entièrement satisfaisante. En effet, l'utilisateur peut devoir activer une application en conflit avec un groupe d'applications sans conflit. De plus, certaines applications, telles que les applications bancaires sont exclusives entre elles même si elles ne sont pas en conflit. Ainsi pour de telles applications, l'utilisateur doit savoir précisément avec quel compte bancaire il paiera sa transaction. Il s'en suit un basculement répété, non ergonomique et inopportun de la présélection des applications qui peut conduire à une dépréciation de la technologie NFC dans son usage.

Afin de pallier ces inconvénients, un but de la présente invention est de proposer un moyen simple pour présélectionner une ou plusieurs applications pouvant partager un même paramétrage lié à la technologie NFC.

Dans ce but, un objet de la présente invention est un procédé de présélection d'au moins une application dans un dispositif mobile de communication comportant un système NFC, ledit dispositif étant apte à accéder et à lire un ensemble d'informations stockées dans un système NFC cible, de type carte ou étiquette électronique sans contact, ledit système NFC étant apte à fonctionner selon au moins deux modes de communication parmi un mode lecteur, et un mode émulation de carte, ou un mode Peer-to-Peer, **caractérisé en ce que** lorsque le système NFC est dans le mode lecteur, on présélectionne au moins une application lors d'une étape de lecture d'informations stockées dans ledit système NFC cible.

Un tel procédé permet de présélectionner rapidement une application ou un groupe d'applications dans un terminal mobile sans l'utilisation de l'interface homme/machine de ce dernier.

Cette présélection est avantageusement temporaire et permet ainsi à utilisateur de revenir à une présélection antérieure.

Cette présélection est automatique, et aussi simple et conviviale que la transaction qui doit être effectuée.

Selon d'autres caractéristiques :
- le procédé peut détecter la présence du système NFC cible par l'intermédiaire d'une commutation automatique des modes de fonctionnement ;
- lors de l'étape de lecture des informations stockées dans le système NFC cible, on peut extraire des données aptes à identifier ladite au moins une application et la durée de validité de ladite au moins une application ;
- la durée de validité de ladite au moins une application peut être automatiquement temporaire par défaut ;
- le procédé peut comporter une étape de confirmation de la durée de validité par un utilisateur ;
- on peut sélectionner la durée de validité par l'intermédiaire de l'interface homme machine dudit dispositif mobile de communication ;
- les données applicatives formatées de l'étiquette sans contact peuvent comporter des données aptes à localiser un serveur distant ;
- on peut localiser un serveur distant de manière à télécharger une application lorsque celle-ci est absente du dispositif mobile de communication, ou est incomplète ou obsolète ;
- l'étiquette électronique sans contact peut contenir l'application à héberger dans le dispositif de communication mobile.

L'invention concerne également un dispositif mobile de communication mettant en oeuvre un tel procédé, ledit dispositif mobile de communication comportant un système NFC, et étant apte à accéder et à lire un ensemble d'informations stockées dans un système NFC cible, de type carte ou étiquette électronique sans contact, ledit système NFC étant apte à fonctionner selon au moins deux modes de communication parmi un mode lecteur, et un mode émulation de carte, ou un mode Peer-to-Peer.

Selon une caractéristique de l'invention, le dispositif de communication mobile peut comporter des moyens aptes à mémoriser et à classer la présélection.

L'invention sera mieux comprise dans la description ci-après d'un mode de réalisation donné à titre d'exemple non limitatifs.

Un dispositif mobile de communication tel qu'un terminal mobile, comporte un système NFC.

Le système NFC est un composant électronique tel qu'un contrôleur, appelé « contrôleur NFC ». Le terminal mobile intègre la fonction NFC assurée par le contrôleur NFC. Ce composant est programmé par l'ensemble des processeurs d'applications au sein du terminal mobile 1. Les standards ETSI TS 102.613 et TS 102.622 assurent par exemple le paramétrage du contrôleur NFC 2 par une carte SIM.

Le contrôleur NFC opère selon au moins deux modes : les modes émulation de cartes et lecteur, ou bien, les modes émulation de carte et P2P. Le contrôleur NFC commute en permanence de manière automatique, et rapidement ces modes. En procédant ainsi, le contrôleur est apte à détecter une carte dans son champ magnétique ou un champ fourni par un lecteur distant. Cette commutation à l'insu de l'utilisateur, rapide et automatique entre les modes est appelée « mode switch ». Quand le mode lecteur est actif, le terminal mobile est apte à accéder et à lire un ensemble d'informations stockées dans un système NFC cible, telle qu'une carte ou une étiquette électronique sans contact contenant une donnée applicative formatée suivant une spécification technique.

Une spécification technique appelée spécification NDEF (NFC Data Exchange Format) permet par exemple, d'activer des applications définies. Par exemple, un type donné de spécification NDEF permet, après lecture, de commuter automatiquement la sonnerie d'un téléphone mobile NFC en mode vibreur ou en mode silencieux.

Un utilisateur est apte à lire une étiquette électronique sans contact contenant un type donné de spécification NDEF ou équivalent, assurant une présélection automatique liée à une application visuellement représenté sur ladite étiquette électronique sans contact (par exemple le logo de l'opérateur de paiement). Ainsi la présélection des applications, utilisant le mode émulation de carte, est réalisée par la lecture préalable d'information formatée issue d'une étiquette électronique sans contact. Cette opération peut être effectuée avant la transaction ciblée par l'utilisateur (paiement, ticket, accès) si l'utilisateur sait que son terminal n'est pas correctement paramétré, la transaction étant réalisée en mode émulation de carte, ou bien après la transaction ciblée par l'utilisateur si cette dernière a échoué.

Selon un mode de réalisation de l'invention, la donnée applicative formatée par exemple de type de spécification NDEF contenue dans l'étiquette électronique sans contact informe sur le nom condensé de l'application. Ainsi lors de l'étape de lecture des informations stockées dans le système NFC cible, on extrait des données aptes à identifier l'application.

L'identifiant de l'application est par exemple codé suivant la spécification RFC3936 (Uniform Resource Identifier: general syntax) et est condensé suivant la spécification RFC 1321 (The MD5 Message-Digest Algorithm). On limite ainsi la quantité de données échangées entre le terminal et l'étiquette électronique sans contact. La taille des données échangées liée à l'identifiant uniforme de ressource, appelé URI (« Uniform Resource Identifier »), identifiant l'application est avantageusement condensé de par l'usage d'une fonction standard de hachage (ex. MD5, SHA-1,...) de 128 bits quelle que soit la longueur de cette URI.

Selon un deuxième mode de réalisation de l'invention, la donnée applicative formatée, par exemple de type de spécification NDEF contenue dans l'étiquette électronique sans contact, informe sur la durée de validité ou persistance de cette dernière. A cet effet, un second champ contenu dans la donnée applicative formatée, informe le terminal mobile sur la persistance de la présélection. Ainsi, lors de l'étape de lecture des informations stockées dans le système NFC cible, on extrait des données aptes à identifier la durée de validité ou persistance de l'application.

De préférence, on utilise une interface homme machine dudit dispositif mobile de communication pour sélectionner la durée de validité.

Selon une première variante de ce deuxième mode de réalisation La persistance de la présélection est permanente.

Selon une autre variante de ce deuxième mode de réalisation, la persistance de la présélection est temporaire : la présélection peut être valable pendant un temps T déterminé par l'utilisateur ou par défaut, ou bien peut être valable pour une transaction seulement, ou pour un nombre déterminé de transactions.

De préférence, la durée de validité de l'application est temporaire par défaut. Une étape de confirmation de la durée de validation est effectuée par l'utilisateur. Ce dernier peut, s'il le désire, modifier la durée de validité de la présélection par exemple par l'intermédiaire de l'interface homme machine.

Selon un autre mode de réalisation, la donnée applicative formatée, par exemple de type de spécification NDEF, contient des données aptes à localiser un serveur de manière à télécharger une application dite « over-the-air » c'est-à-dire qui permet d'accéder aux données à distance, par exemple lorsque celle-ci e n'est pas installée dans le terminal ou est incomplète ou encore obsolète.

Selon une variante du mode de réalisation précité où il est possible de télécharger une application, la donnée applicative formatée, par exemple de type de spécification NDEF, de l'étiquette électronique sans contact contient l'application qui doit être hébergée dans le terminal mobile. Cela permet le déploiement d'une application à caractère local. De préférence, la persistance de l'application au sein de l'hôte est temporaire. Ainsi une application peut être activable pour un nombre donnée de transactions ou une durée déterminée.

Une fois la présélection obtenue, celle-ci est ensuite mémorisée et classée dans le terminal mobile de manière à être rappelée ultérieurement par l'utilisateur du terminal mobile. L'utilisateur peut alors programmer un ensemble de présélection et les utiliser dans les environnements où ces étiquettes électroniques ne sont pas disponibles ou déployées.

Une telle application opérant la présélection doit avantageusement être activée et être à l'écoute de manière à exploiter la donnée applicative formatée contenue dans l'étiquette électronique sans contact lue par le terminal quand le mode lecteur est actif.

Lorsque l'étiquette électronique sans contact est lue, l'application de présélection est activée indirectement, ce qui provoque la présélection au sein du dispositif hôte hébergeant les applications à présélectionner.

Une transaction, par exemple, dans un réseau de transport doit être rapide et ne nécessiter aucune intervention de l'utilisateur. Celui-ci opère un geste simple pour une transaction n'excédant pas une fraction de seconde. Si par inadvertance, la présélection n'est pas adéquate et n'autorise pas la transaction, un second geste équivalent, utilisant le procédé selon l'invention permet de présélectionner convenablement l'application et donc d'effectuer correctement la transaction.

Il sera compris, sans sortir du cadre de l'invention, que ces modes de réalisations sont donnés à titre d'exemple non limitatifs. La durée de validité de la présélection peut par exemple, être ou non optionnelle, définie par défaut ou par l'utilisateur.

La technologie décrite est compatible avec les produits du type carte SIM compatible NFC intégrées au sein d'un terminal comportant un système NFC et fonctionnant selon les standards ETSI. Il sera également compris que l'invention peut être étendue à tout terminal pouvant émuler une carte sans contact quelle que soit la nature de l'élément sécurisé ou non sécurisé, hébergeant les applications.

Un tel procédé de présélection avantageusement automatique et un dispositif mobile de communication mettant en oeuvre ce procédé permettent une présélection temporaire ou permanente d'une application ou d'un groupe d'application par un geste simple, rapide et convivial générant la lecture d'une étiquette électronique sans contact contenant la définition de la présélection appropriée.

Un tel procédé permet de présélectionner une ou plusieurs applications pouvant partager un même paramétrage lié à la technologie NFC. Il est possible de présélectionner plusieurs applications contenues dans une même étiquette électronique tant qu'elles ne sont pas en conflit fonctionnel. Deux moyens de paiement peuvent par exemple être en conflit fonctionnel contrairement à un moyen de paiement et une application de fidélisation.

Un utilisateur n'a pas à naviguer dans un menu complexe de choix afin de présélectionner les applications en utilisant l'interface homme/machine usuelle de son terminal.

## Revendications

1. Procédé de présélection d'au moins une application dans un dispositif mobile de communication comportant un système NFC,
a. ledit dispositif étant apte à accéder et à lire un ensemble d'informations stockées dans un système NFC cible, de type carte ou étiquette électronique sans contact,
b. ledit système NFC étant apte à fonctionner selon au moins deux modes de communication parmi un mode lecteur, et un mode émulation de carte, ou un mode Peer-to-Peer,
**caractérisé en ce que** lorsque le système NFC est dans le mode lecteur, on présélectionne au moins une application lors d'une étape de lecture d'informations stockées dans ledit système NFC cible.

2. Procédé selon la revendication 1 **caractérisé en ce qu'**on détecte la présence du système NFC cible par l'intermédiaire d'une commutation automatique des modes de fonctionnement.

3. Procédé selon l'une des revendications précédentes **caractérisé en ce que** lors de l'étape de lecture des informations stockées dans le système NFC cible, on extrait des données aptes à identifier ladite au moins une application et la durée de validité de ladite au moins une application.

4. Procédé selon la revendication 3 **caractérisé en ce que** la durée de validité de ladite au moins une application est automatiquement temporaire par défaut.

5. Procédé selon l'une des revendications précédentes **caractérisé en ce qu'**il comporte une étape de confirmation de la durée de validité par un utilisateur.

6. Procédé selon la revendication 5 **caractérisé en ce qu'**on sélectionne la durée de validité par l'intermédiaire de l'interface homme machine dudit dispositif mobile de communication.

7. Procédé selon l'une des revendications précédentes **caractérisé en ce que** les données applicatives formatées de l'étiquette sans contact comportent des données aptes à localiser un serveur distant.

8. Procédé selon la revendication 7 **caractérisé en ce qu'**on localise un serveur distant de manière à télécharger une application lorsque celle-ci est absente du dispositif mobile de communication, ou est incomplète ou obsolète.

9. Procédé selon l'une des revendications 1 à 5 **caractérisé en ce que** l'étiquette électronique sans contact contient l'application à héberger dans le dispositif de communication mobile.

10. Dispositif mobile de communication comportant un système NFC, ledit dispositif étant apte à accéder et à lire un ensemble d'informations stockées dans un système NFC cible, de type carte ou étiquette électronique sans contact, ledit système NFC étant apte à fonctionner selon au moins deux modes de communication parmi un mode lecteur, et un mode émulation de carte, ou un mode Peer-to-Peer, ledit dispositif étant apte à mettre en oeuvre le procédé selon l'une des revendications précédentes.

11. Dispositif de communication mobile selon la revendication 9 **caractérisé en ce qu'**il comporte des moyens aptes à mémoriser et à classer la présélection.
